# EUROPEAN PATENT SPECIFICATION

(11) **EP 1 160 278 B1**
(45) Date of publication and mention of the grant of the patent: **15.08.2007**
(21) Application number: 00110989.1
(22) Date of filing: 29.05.2000
(51) Int. Cl.: C08K 9/04, C08K 9/00

(54) **Anti-blocking agents with improved dispersability in polyolefin films and methods for making and using the same**
Partikel die Folienblocken verhindern mit verbesserter Dispergierbarkeit in Polyolefinfilmen, ihre Herstellungsmethode und Verwendung
Agents améliorant le glissement des pellicules de polyoléfines qui sont mieux dispersables dans le polymère, procédé de production, utilisation

(43) Date of publication of application: 05.12.2001
(73) Proprietor: Grace GmbH & Co. KG, 67545 Worms (DE)
(72) Inventor: Essche, Gonda van, 67549 Worms (DE); Schmidt, Andreas, 68167 Mannheim (DE)
(74) Representative: UEXKÜLL & STOLBERG

(56) References cited:
- EP-A- 0 496 150
- GB-A- 1 056 507
- GB-A- 2 031 910
- US-A- 3 902 915
- US-A- 4 350 655
- US-A- 5 175 051
- GÄCHTER, MÜLLER: "Taschenbuch der Kunststoff Additive" 1990 , CARL HANSEN VERLAG , WIEN XP002160904 * page 568, paragraph 9.3.4.2. * * page 571, paragraph 5 * * page 461, paragraph 6.2.4.3. * * page 495, paragraphs 1,4 * * page 486 - page 487 *

## Description

### BACKGROUND OF THE INVENTION

This invention relates to particulates which are suitable as anti-blocking agents for plastic films. The invention more particularly relates to highly porous anti-blocking particulates and methods for rendering them more dispersible in polymers used to make the films.

Porous particulate inorganic oxides, e.g., silica gels, are widely used as anti-blocking agents in polymer films, especially polyolefin films. Anti-blocking agents for these films typically have average particle sizes in the range of 1 to 20 µm, and generally are incorporated into the films in concentrations ranging from 0.001 to 2.0% by weight. It is believed that these particles produce microscopic surface deformations which reduce contact between two surfaces of films lying on one another, thereby facilitating the separation of those surfaces, e.g., separating the two sides of a bag or the unwinding of film from a roll. The resistance to separation is called "blocking" and agents added to reduce the resistance impart what is called "anti-blocking".

Synthetic amorphous silica gels are particularly suitable for anti-blocking. They have a relatively large specific pore volume (porosity) and provide a larger number of particles (of a certain size) per gram than products with lower porosity (e.g., talc, chalk, naturally occurring silica such as diatomaceous earth). For these reasons, micronized porous synthetic silica gels are known to be more effective anti-blocking agents than products with low or no porosity.

Anti-blocking agents can be sold directly to polymer resin manufacturers or more typically sold to film manufacturers as masterbatches. Masterbatches are prepared by adding the anti-block agent at high loading into a base polymer. These masterbatches are then processed through an extruder to prepare masterbatch pellets. The pellets are added as concentrates to a polymer resin which is then itself processed through a film extruder to form the polyolefin film.

Relatively highly porous anti-block particulates, however, can agglomerate into larger particles before and/or during mixing to make the masterbatch or during the masterbatch extrusion process to make pellets. These large agglomerates are difficult to break up and, as a result, they can be present when the masterbatch exits the extruder. This leads to frequent blockages of screens which filter out unmolten polymer particles and undispersed additives. Blockages in turn cause lower production output.

These agglomerates also lead to inferior film product. More specifically, these agglomerates are known to cause imperfections called "nibs or fish eyes". These nibs appear as holes or blemishes in the films. Because porous inorganic oxides such as amorphous silica gel are efficient anti-blocking agents, there is a need to decrease their tendency to agglomerate and/or improve their dispersability to reduce the creation of nibs, yet do so without detrimentally affecting the agent's performance.

In the field of architectural coatings, it is known that the dispersability of flatting agents made from porous inorganic oxide particulate can be improved by coating the flatting agent with polyolefin wax. Untreated flatting agents can settle over time and the resulting sediment is then difficult to redisperse. Wax treated agents, on the other hand, are more easily redispersed after settling. The same type of treatment has been suggested for film pigments and colorants to improve their dispersability, but has met with limited success.

Dispersible silica and/or alumina particulates in the size range of 30-50 millimicrons have been described in UK 1,109,840. The particulates mentioned in this application are treated with surface active agent in amounts ranging from 10 to 600 parts per 100 parts particulate. Among the many agents mentioned, sorbitan monostearate and other particular fatty acid esters are mentioned. The preferred embodiments described however contain high amounts of organic, e.g., 50 parts surface active agent per 100 parts particulate. The reference also only mentions particulates in the range of 30-50 millimicrons and only discloses using those particles in applications typically associated with such fine sized particles, e.g., reinforcing agents for rubber and pigments for paint. There is no mention of treating particulates suitable for anti-blocking, i.e., those having particulate sizes in the range of 1 to 20 microns.

Surface active agents mentioned in UK 1,109,840, e.g., sorbitan monostearate, have also been described as dispersing agents for inorganic additives used to reduce haze in olefin films. See U.S. 4,490,502. U.S. 4,560,609 also describes sorbitan monostearate as a dissolution agent for an inorganic additive which is used to impart heat retention in polymer films. Each of these patents suggests adding those agents to the film's polymer base separately from the inorganic additive. As indicated later below, when such organics are added to films containing conventional anti-blocking agents, an unacceptable amount of nibs still occur.

Other fatty acid esters have been mentioned as anticaking agents (U.S. 4,288,460) and refractive index modifiers for films (U.S. 4,415,691). However, the references above do not describe or suggest solutions to improving dispersability of particulate porous inorganic oxides suitable for anti-blocking agents. Therefore there is a need to continue improving the dispersability of porous inorganic oxides so as to maximize the value of these highly efficient agents.

### SUMMARY OF THE INVENTION

A readily dispersible porous particulate anti-block for polymer, e.g., polyolefin, films can be prepared by combining conventional porous particulate inorganic oxides as claimed with polar surface active agents such as fatty acid ester as claimed prior to adding the inorganic oxide to the polymer base used to prepare the film. It has been found that the mere addition of a surface active agent such as those above to a mixture of polymer and anti-block agent does not provide satisfactory results. On the other hand, Applicants have noted significant improvement in the anti-blocking agent's dispersability when a surface active agent is intimately mixed with the anti-block before it is added to the polymer base.

The dispersability is further improved if the two components of the invention are combined so that the surface active agent is coated onto the particulate porous inorganic oxide. The surface active agent is preferably added to the anti-blocking agent in amounts such that the final particulate product has a carbon content in the range of about 1 to about 15% by weight based on the total weight of the surface active agent and inorganic oxide. The final particulate also has an average particle size of conventional anti-blocking agents, e.g., about 1 to 20 microns.

### DETAILED DESCRIPTION

Porous Inorganic Oxide. The porous inorganic oxides of the invention are micronized amorphous silica gel (e.g., xerogel) and precipitated silica typically used as anti-blocking agents. The pore volume for these particulates can range from 0.3 to 2.0 cc/g. While less porous particulates can benefit from this invention, those particulates which have a pore volume of at least 0.6 cc/g are more suitable because those agents have a higher pore volume and are more difficult to disperse than products having a smaller pore volume. The products having smaller pore volumes also are less effective at providing anti-blocking and therefore are less suitable for a number of anti-block applications. Particulates having pore volumes in the range of 0.8 to 2.0 cc/g are even more suitable. The porous particulates and the methods for their manufacture are well known.

Traditional amorphous silica gel anti-blocking agents are preferably prepared by milling and drying a base silica gel to an average particle size in the range of about 1 to 20 microns, as measured by a Mastersizer (light scattering) particle size analyzer instrument from Malvern. The surface areas of the traditional porous anti-blocking particulate are in the range of 100-650 m²/g. Higher pore volume silicas have surface areas in the range of from about 250 to about 500 m²/g and have average pore diameters of 7 to 50 nm. The pore volumes reported herein are measured by conventional nitrogen porosimetry and surface area is measured using the BET technique.

Suitable porous precipitated silicas include those described in "The Chemistry of Silica," Ralph K. Iler, A Wiley-Interscience Publication, John Wiley & Sons (1979), e.g., pp. 554-560, thereof. Such precipitated silicas have pore volumes in the range of 0.1 to 0.8 cc/g, surface area of 50-500m²/g and an average particle size of 2 to 15 microns. Methods for making precipitated silica are known in the art as shown in the above-mentioned "The Chemistry of Silica".

Surface Active Agent. Suitable active agents as claimed are those which are polar and have an ester linkage. Such agents are known and described in the literature. See Kirk Othmer's Encyclopedia of Chemical Technology, 2d Edition, Vol. 19, pp. 507-593. Suitable surface active agents are fatty acid esters.

Suitable fatty acid esters are, fatty ester acids of polyhydric alcohols such as fatty acid monoglycerides, fatty acid sorbitan esters, fatty acid polyglycerin esters. Particularly preferred embodiments include glycerin monostearate, sorbitan monostearate and sorbitan monooleate. Other suitable agents include sorbitan monolaurate, sorbitan tristarate, and sorbitan esquioleate. Alkylene oxide adducts of the above compounds may also be used. Such adducts include polyoxyethylene monooleate, polyoxyethylene sorbitan monolaurate, polyoxyethylene monostearate, and polyoxyethylene monolaurate.

The porous inorganic oxide particulate and polar surface active agent are combined in a manner to produce a particulate having an average particle size in the range of about 1 to about 20 microns and a carbon content of about 1 to about 15% based on the weight of the inorganic oxide and surface active agent. Preferred particle sizes are in the range of 1 to 12 microns, and more preferably in the range of 1 to 7 microns. Other preferred embodiments have particles sizes in the range of 10-12 microns.

The surface active agent is added in an amount effective to disperse the antiblocking particulate in a polymer. The amount added is reflected by the carbon content in the final product. The carbon content of the invention is in the range of 1 to 15%, but preferably in the range of I to 10% by weight of the particulate and surface active agent. Reference to carbon content herein is used to mean the amount of carbon present in a particular sample. For example, if a coated particulate is combusted with excess oxygen at 1450° C, any hydrocarbon present is converted to carbon dioxide and water. The water is removed and the resulting dried gas is fed through an infrared cell at a controlled rate, e.g., 4 1/min. The concentration of carbon dioxide in the stream is then measured by an analyzer, e.g., an SC-444 Analyzer from LECO. That concentration is converted into a percentage/(ppm) carbon value taking into account the sample weight, calibration and known moisture value. In most instances, the above carbon content can be obtained by adding about 5 to about 20% by weight surface active agent based on the weight of inorganic oxide.

The invention can be prepared by combining and intimately mixing surface active agent and a finished anti-blocking particulate in a mixer or fluidized dryer. In this embodiment, the particulate is first pre-milled to the average particle size desired for the final product and then the milled particulate and surface active agent are added to a mixer or dryer. The surface active agent can also be added to the inorganic oxide particulate as the particulate is being milled to its final average particle size. This procedure can be conducted in a jet mill or fluidized energy mill designed to intimately and thoroughly mix materials. Both methods are illustrated in the examples below.

Either method can be used to produce particulate consisting essentially of inorganic oxide and surface active agent, e.g., as the only two components or including minor amounts of additional component(s) which do not affect the properties of the particulate. When using either of the above-described methods, it is preferred to choose conditions which produce a coating of surface active agent on the inorganic oxide particulate. This is generally accomplished by heating the mixer or mill as the materials are blended or otherwise put in contact with one another. In certain instances, there is a need to heat the mixture of surface active agent and particulate to the surface active agent's melting point, e.g., when using a Henschel mixer. The particular mill or mixer chosen, heating temperatures, and mill or mixer residence times, however, depend on the porous inorganic oxide, desired average particle size, desired drying content and the particular surface active agent chosen. For most processes the coating temperature used is in the range of 55 to 200° C.

Another less preferred method is to combine the inorganic oxide and surface active agent and add the mixture "as is" to an additive inlet to an extruder used to make masterbatch pellets or film. Modification and selection of the parameters for each of the above-described methods is within the knowledge of those with ordinary skill in the art. See, U.K. 1,109,840.

The invention can be incorporated into polyolefin polymer, e.g., polyethylene and polypropylene, using conventional techniques and conventional amounts. Those amounts can be in the range of 0.001 to 2.0% by weight of polymer, while in most typical applications used in amounts of 0.01 to 0.5% by weight. The invention can also be incorporated into a polymer masterbatch. In that case the invention is added to polymer at high concentrations, e.g., 80-95 wt. % polymer plus 5-20 wt. % invention. Masterbatches are prepared by combining the polymer and anti-block in equipment such as Banbury mixers, internal kneaders or screw kneaders to make pellets or powder. The pellets or powder is then fed into an extruder to make film. In case a masterbatch is used, the masterbatch is mixed with the polymer granules in such a ratio as to obtain a final anti-blocking aid concentration of 0.01 to 0.5% by weight of polymer. Extruding the film from a masterbatch is well known in the art. Suitable film preparation methods are disclosed in U.S. Patent 4,327,009 or U.S. Patent 4,415,691, the contents of which are incorporated by reference. Typical films in which the invention can be used in films having a wide variety of film thicknesses. Generally, the invention can be used with films having thickness in the range of 0.5-100 microns. The anti-blocking agents of the invention show an anti-blocking effect which is at least equal to that shown by untreated anti-blocking agents.

The following examples of the invention are illustrative and are not intended to any way limit the invention as recited in the appended claims.

### ILLUSTRATIVE EXAMPLES

Examples 1-4 illustrate various methods for manufacturing the particulate of this invention. Wax coated particulate was also prepared for comparison against those of the invention.

### Example 1: Fluidized Mill

A porous silica particulate sold by Grace GmbH & Co. KG as SYLOBLOC K500 anti-block and 15% by weight of various waxes were mixed in a fluidized mill to form coated anti-blocking agents. These mixtures were put through an Alpine™ fluidized mill at temperatures of 160 to 210° C in order to melt the wax on the silica surface, resulting in coated silica with a carbon content from 0.7 to 10%. These samples are those listed as A, B, and F-I in Example 5. SYLOBLOC K500 anti-block has an average particle size (APS) of 5 microns as measured by a Malvern Mastersizer particle size analyzer and a pore volume of 1.6 cc/g as measured by a Malvern ASAP nitrogen porosimeter. Pore volumes were measured after the sample was activated at 200° C for three hours. The vacuum applied was that programmed by the porosimeter manufacturer.

### Example 2. Mixer

250 g silica anti-block commercially available as SYLOBLOC^{®} K300 and 25 g sorbitan monostearate were added in a 10 liter Henschel mixer. SYLOBLOC K300 has a pore volume of 1.6 cc/g, an average particle size of 3.6 microns and a surface area of 320 m²/g. The mixer was externally heated to 60° C. The products were mixed with a rotation speed of 3800 rpm until a product end temperature of 60° C was reached. The end product had a carbon content of 6.3%.

### Example 3. Fluid Energy Mill

A base silica gel with a pore volume of 1.6 ml/g, and a BET surface area of 260 m²/g was used as starting material. This material was air milled to a particulate having an average pore size of 5.4 microns, using a 5 mm spacer mill and a throughput of 280 kg/h. This product was coated during milling by adding sorbitan monosterate in the jet to obtain 10% and 7.5% coating by dosing the sorbitate into the mill at rates of 28 kg/h and 25 kg/h respectively. This resulted in particulates having carbon contents of 6.0% and 5.0% respectively.

### Example 4. Fluidized Bed Dryer

400 g of the SYLOBLOC^{®} K500 anti-block mentioned in Example 1 and 60 g of Coatex DO-PP20 phosphoric acid ester were added into a 3 liter Heinen lab fluid bed dryer. The material was heated from 30° C up to 86° C by using heated air at a temperature of 100° C. The residence time in the fluidized bed dryer was 10 minutes at an airflow rate of 30 Nm³/h. The air stream velocity was 0.28 m/sec. The end product had a carbon content of 9.3%.

### Example 5. Dispersability

5% silica masterbatches of the coated anti-blocks listed below were made in polypropylene (PP) on a Theysohn twin screw extruder. These masterbatches were then diluted with granulated PP while mixed in a tumbler mixer and then processed to produce films having a concentration of 2000 ppm (0.2%) silica on a Collin cast film line. The extruder conditions are indicated below.
Theysohn twin screw extruder 30/40D
Screen: 200 Mesh
Speed: 300 rpm
Temperature: 250-190°C
Products tested:
(1) Untreated SYLOBLOC^{®} K500 anti-block
(2) Treated SYLOBLOC^{®} K500 Anti-Block coated with A-J :

| Trade Name | Product | Source | Carbon Content |
|---|---|---|---|
| A: OP | PP Wax | Hoescht | 12.45% |
| B: PP 230 | PP Wax | Hoescht | 7.37% |
| C: Cithrol GMS | Glycerin Monostearate | Croda | 12.2% |
| D: Crillet 4 | Sorbitan Monooleate | Croda | 9.4% |
| E: Crill 3 | Sorbitan Monostearate | Croda | 9.7% |
| F: Polywax 500 | PP Wax | Petrolite | 2.68% |
| G: Besquare 195. | Polyethylene Wax | Petrolite | 5.14% |
| H: Polywax 850. | PP Wax | Petrolite | 4.55%. |
| I: Polywax 1000. | PP Wax | Petrolite | 2.68% |
| J: DO-PP20 | Phosphoric acid ester | Coatex | 9.5% |

The cast polypropylene film were visually judged for nibs using the following ranking:
Disp. 1: well dispersed silica (relatively no nibs), e.g., < 500 nibs/m²
Disp. 2: some minor silica nibs present ,e.g., < 1500 nibs/m²
Disp. 3: a significant number of silica nibs present ,e.g., > 1500 nibs/m², film quality not acceptable
Disp. 4: full of nibs, film unacceptable
Dispersability ranking of the films:

| Sample | SL K500 | A | B | C | D | E | F | G | H | I | | J |
|---|---|---|---|---|---|---|---|---|---|---|---|---|
| Disp. | 4 | 3 | 3 | 1 | 1 | 1 | 4 | 4 | 4 | 4 | | 1 |

### Example 6. Anti-blocking and Other Film Property Performance

Coefficient of friction, anti-blocking and optical (haze) properties were measured for SYLOBLOC® K500 anti-blocking agent (untreated) and SYLOBLOC® K500 treated with 7.5% by sorbitan monostearate (S.M.S.) and that treated with 10% sorbitan monostearate. The anti-block agents were added to a random polypropylene copolymer film at concentrations of 1000, 2000 and 3000 ppm. The treated anti-blocks were prepared using methods described earlier. 1000 ppm erucamide slip aid were also added to each sample. The films produced for these tests had a thickness of 35 microns.

The coefficient of friction values (measured one and seven days afterwards) are reported below.

| **Coefficient of Friction*** | | | |
|---|---|---|---|
| Anti-block | Concentration | CoF after 1 Day | CoF after 7 Days |
| SL K500 | 1000 | 0.6 | 0.23 |
| | 2000 | 0.7 | 0.33 |
| | 3000 | 0.72 | 0.41 |
| 7% S.M.S. | 1000 | 0.67 | 0.24 |
| | 2000 | 0.64 | 0.34 |
| | 3000 | 0.67 | 0.35 |
| 10% S.M.S. | 1000 | 0.57 | 0.21 |
| | 2000 | 0.63 | 0.35 |
| | 3000 | 0.65 | 0.40 |

| | | | |
|---|---|---|---|
| *Measured per ASTM D 1894-73 using a conventional ftiction/peel tester. The above values are averages from tests on three identical specimens (170 mm x65 mm) which are drawn at 15cm/min for twenty seconds. | | | |

Blocking values for the above films are reported below.

| **Blocking Values*** | | | |
|---|---|---|---|
| Anti-block Conc./ppm | 1000 | 2000 | 3000 |
| SL K500 | 0.38 | 0.19 | 0.17 |
| 7% S.M.S. | 0.30 | 0.20 | 0.15 |
| 10% S.M.S. | 0.37 | 0.17 | 0.14 |

| | | | |
|---|---|---|---|
| * Forced 100 = Newton Force (F) measured in grams of weight needed to separate two films made from test maternal. Force measured using DYNISCO™ Kageness' electronic Block-Reblock device. Films were first pretreated by storing films at 23°C at 50% relative humidity for twenty- four hours (24h). The films were then deblocked and blocked at 70°C under load of 0.8N for one hour and at 23°C for a second hour at the same load. Then blocking values were measured using ASTM D3354. | | | |

Haze was also measured for the above samples. Haze is an effect arising from large-angle scattering of light. Lower value numbers refer to clearer films. The values below were reported from a Hazegard Plus™ device from Gardner, while using conventional conditions and standards (Haze Standard H 10, Cat. No. 4742, Serial No. 635709 and where the control had a value of J 1.4). Haze is measured pursuant to ASTM D1003.

| **Haze Values*** | | | |
|---|---|---|---|
| Anti-block Conc./ppm | 1000 | 2000 | 3000 |
| SL K500 | 1.8 | 3.3 | 5.1 |
| 7% S.M.S. | 1.7 | 3.4 | 4.9 |
| 10% S.M.S. | 2.0 | 3.3 | 5.0 |

Dispersability of the above examples was also measured by a visual evaluation as well as by counting the nibs and by measuring the pressure build up at the end of the extruder.

| Dispersability Silica Concentration 2000 ppm | | | |
|---|---|---|---|
| | Visual¹ | Nib/Counting² | Pressure Test³ |
| SL K500 | 4 | 3000 Nibs/m² | 4.55 dp/dt |
| 7% S.M.S. | 2 | 707 | 0.33 |
| 10% S.M.S. | 2 | 792 | 0.6 |

| | | | |
|---|---|---|---|
| ¹ Visual Judgment The amount of nibs in a film is judged visually and ranked according to the following values: 1. hardly any nibs present 2. some nibs present 3. a lot of nibs present 4. full with nibs ² Nib Counting 1x5 film is moved on an overhead projector. The number of nibs of different sizes are counted on calibrated wallchart. Nibs are counted with sizes in the range of 0.2 mm to 1.5 mm. The total number of nibs per square meter is then calculated. ³ Pressure Built Up Test A 4% silics containing masterbatch is fed into a single screw extruder which contains a screen package (20µ). The pressure before the screen is measured as a function of time. The result is then expressed as dp/dt (pressure increase over time). The lower dp/dt. the better the dispersability. | | | |

### Example 7. Dispersability Comparisons

The dispersability of this invention (porous silica particulate coated with sorbitan monostearate) was compared to particulate added to polymer separately from the monostearate, as well as compared to a particulate prepared by simply mixing the two components before adding the components to a polymer.

### (i) Samples

- Sample 1:: SYLOBLOC K500 anti-block coated with 10% sorbitan monostearate (product was coated during milling). The method described in Example 3 was used to coat this sample.
- Sample 2:: SYLOBLOC K500 anti-block mixed with 10% sorbitan monostearate in a tumble mixer at ambient temperature.
- Sample 3:: The sorbitan monostearate was added to polymer separately before adding SYLOBLOC K500 anti-block silica. The amount of stearate added was 10% by weight of silica. Polymer and stearate were first tumble mixed at room temperature and then fed into extruder. Silica was then added to the polymer downstream.
- Sample 4:: SYLOBLOC K500 anti-block alone.

### (ii) Preparation of Masterbatches

Polymer masterbatches were made from the above samples on a Theysohn twin screw extruder (30D). 5% of the sample particulate was added to a polypropylene homopolymer resin (Eltex HV 001 PF-Solvay) using a side feeder into the polymer stream. For Sample 3, the sorbitan monostearate was mixed with the HV 001PF polymer resin, followed by downstream addition of SYLOBLOC K500 into the extruder. The extrusion conditions for all the samples were:

| | |
|---|---|
| Extrusion temperatures: | 230°C |
| Throughput: | 12 kg/h |
| Screen package: | 200 Mesh |

### (iii) Preparation of films

The masterbatches from (ii) were diluted with a EP1X30F (Montell) polypropylene random copolymer with ethylene. Crodamide ER slip aid was also added via a 5% masterbatch to obtain an end concentration of 1000 ppm anti-block in the final film. Cast films were produced on a Dr. Collin™ cast film line under the following conditions.

| | |
|---|---|
| Extrusion temperature: | 260 °C |
| Film Thickness: | 35µ |

### (iv) Dispersability

The number of nibs (undispersed silica) per square meter in the final film were counted.

| Sample | Nibs/m² |
|---|---|
| Blanc film (no silica) | 365 |
| Sample 1 | 1059 |
| Sample 2 | 1467 |
| Sample 3 | 3286 |
| Sample 4 | <10,000 |

The dispersability of the silica coated with sorbitan monostearate was unexpectedly better than silica added separately from the surface active agent. As shown above, the separate addition of sorbitan monostearate to the polymer had no pronounced effect on the dispersability since all films with more than 1500 nibs/m² are unacceptable in terms of film quality. Significantly improved dispersability is also seen over silicas which have simply been mixed with surface active agent prior to adding it to the polymer film.

## Claims

1. A particulate comprising:
(a) porous inorganic oxide selected from silica gel and precipitated silica; and
(b) an ester-containing surface active agent selected from fatty acid monoglycerides, fatty acid sorbitan esters, fatty acid glycerin esters and mixtures thereof, in particular glycerin monostearate and sorbitan monostearate;
wherein the average particle size of the particulate is in the range of 1 to 20 microns and the particulate has a carbon content in a range of 1 to 15% by weight of (a) + (b).

2. The particulate of claim 1 wherein (a) has a coating comprising (b).

3. The particulate of claim 1 or 2 wherein the particulate is prepared by co-milling (a) and (b) at a temperature in the range of 55 to 200°C.

4. The particulate of any of claims 1 to 3 wherein the particulate has an average particle size in the range of 1 to 12 microns.

5. The particulate of any of claims 1 to 4 wherein the particulate has an average particle size of 1 to 7 microns.

6. The particulate of any of claims 1 to 5 wherein (b) is a member of the group consisting of sorbitan fatty acid esters and mixtures thereof.

7. The particulate of any of claims 1 to 6 wherein the particulate has a carbon content of 1 to 10% by weight of (a) + (b).

8. The particulate of any of claims 1 to 7 wherein the particulate has a pore volume in the range of 0.3 to 2.0 cm³/g.

9. The particulate of any of claims 1 to 8 wherein the particulate has a pore volume in the range of 0.8 to 2.0 cm³/g.

10. A polymer film comprising 0.001 to 2.0% by weight of the particulate according to any of claims 1 to 9.

11. The film of claim 10 wherein the polymer comprises polyolefin.

12. The film of any of claims 10 to 11 wherein the film has a thickness in the range of 0.5 to 100 microns.

13. A method of preparing a particulate anti-block agent comprising:
1) combining porous inorganic oxide particulate selected from silica gel and precipitated silica, with an ester-containing surface active agent selected from fatty acid monoglycerides, fatty acid sorbitan esters, fatty acid glycerin esters and mixtures thereof, in particular glycerin monostearate and sorbitan monostearate, such that particulate has a carbon content in a range of 1 to 15% by weight based on the weight of the particulate and agent;
(2) mixing the combination from (1) and recovering a particulate having an average particle size of 1 to 20 microns.

14. The method of claim 13 wherein the mixing is performed at a temperature of 25°C or more.

15. A method of imparting anti-blocking to a polymer film comprising:
(1) combining a polymer and a particulate according to any of claims 1 to 9; and
(2) forming a film from the mixture of (1) in a manner such that the film comprises 0.001% to 1% by weight particulate based on the total weight of the film.

16. Use of a particulate according to any of claims 1 to 9 as anti-blocking agent for polymer films.

17. Polymer masterbatch comprising polymer and 5 to 20% by weight of a particulate according to any of claims 1 to 9.

## Patentansprüche

1. Teilchenförmiger Feststoff, der umfasst:
(a) poröses anorganisches Oxid ausgewählt aus Siliciumdioxidgel und ausgefälltem Siliciumdioxid und
(b) Ester enthaltendes oberflächenaktives Mittel ausgewählt aus Fettsäuremonoglyceriden, Fettsäuresorbitanestern, Fettsäureglycerinestern und Mischungen derselben, insbesondere Glycerinmonostearat und Sorbitanmonostearat,
wobei die durchschnittliche Teilchengröße des teilchenförmigen Feststoffs im Bereich von 1 bis 20 µm liegt und der teilchenförmige Feststoff einen Kohlenstoffgehalt im Bereich von 1 bis 15 % des Gewichts von (a) + (b).

2. Teilchenförmiger Feststoff nach Anspruch 1, bei der (a) eine Beschichtung aufweist, die (b) umfasst.

3. Teilchenförmiger Feststoff nach Anspruch 1 oder 2, bei dem der teilchenförmige Feststoff durch gemeinsames Mahlen von (a) und (b) bei einer Temperatur im Bereich von 55 bis 200 °C hergestellt worden ist.

4. Teilchenförmiger Feststoff nach einem der Ansprüche 1 bis 3, bei dem der teilchenförmige Feststoff eine durchschnittliche Teilchengröße im Bereich von 1 bis 12 µm aufweist.

5. Teilchenförmiger Feststoff nach einem der Ansprüche 1 bis 4, bei dem der teilchenförmige Feststoff eine durchschnittliche Teilchengröße von 1 bis 7 µm aufweist.

6. Teilchenförmiger Feststoff nach einem der Ansprüche 1 bis 5, bei dem (b) ein Mitglied der Gruppe bestehend aus Sorbitanfettsäureestern und Mischungen derselben ist.

7. Teilchenförmiger Feststoff nach einem der Ansprüche 1 bis 6, bei dem der teilchenförmige Feststoff einen Kohlenstoffgehalt von 1 bis 10 % des Gewichts von (a) + (b) aufweist.

8. Teilchenförmiger Feststoff nach einem der Ansprüche 1 bis 7, bei dem der teilchenförmige Feststoff ein Porenvolumen im Bereich von 0,3 bis 2,0 cm³/g aufweist.

9. Teilchenförmiger Feststoff nach einem der Ansprüche 1 bis 8, bei dem der teilchenförmige Feststoff ein Porenvolumen im Bereich von 0,8 bis 2,0 cm³/g aufweist.

10. Polymerfolie, die 0,001 bis 2,0 Gew.-% an teilchenförmigem Feststoff gemäß einem der Ansprüche 1 bis 9 umfasst.

11. Folie nach Anspruch 10, bei der das Polymer Polyolefin umfasst.

12. Folie nach einem der Ansprüche 10 bis 11, bei der die Folie eine Dicke im Bereich von 0,5 bis 100 µm aufweist.

13. Verfahren zur Herstellung eines teilchenförmigen Antiblokkingmittels, bei dem
1) poröser, anorganischer Oxidfeststoff ausgewählt aus Siliciumdioxidgel und ausgefälltem Siliciumdioxid mit einem Ester enthaltenden oberflächenaktiven Mittel ausgewählt aus Fettsäuremonoglyceriden, Fettsäuresorbitanestern, Fettsäureglycerinestern und Mischungen derselben, insbesondere Glycerinmonostearat und Sorbitanmonostearat, so kombiniert wird, dass der teilchenförmige Feststoff einen Kohlenstoffgehalt im Bereich von 1 bis 15 Gew.-%, bezogen auf das Gewicht des teilchenförmigen Feststoffs und des Mittels, aufweist,
2) die Kombination von (1) gemischt wird und teilchenförmiger Feststoff mit einer durchschnittlichen Teilchengröße von 1 bis 20 µm gewonnen wird.

14. Verfahren nach Anspruch 13, bei dem das Mischen bei einer Temperatur von 25 °C oder höher durchgeführt wird.

15. Verfahren zur Vermittlung von Antiblocking an eine Polymerfolie, bei dem
(1) ein Polymer und ein teilchenförmiger Feststoff gemäß einem der Ansprüche 1 bis 9 kombiniert werden und
(2) aus der Mischung von (1) auf eine solche Weise eine Folie gebildet wird, dass die Folie 0,001 bis 1 Gew.-% teilchenförmigen Feststoff, bezogen auf das Gesamtgewicht der Folie, umfasst.

16. Verwendung eines teilchenförmigen Feststoffs gemäß einem der Ansprüche 1 bis 9 als Antiblockingmittel für Polymerfolien.

17. Polymermasterbatch, der ein Polymer und 5 bis 20 Gew.-% eines teilchenförmigen Feststoffs gemäß einem der Ansprüche 1 bis 9 umfasst.

## Revendications

1. Matière particulaire comprenant :
(a) un oxyde inorganique poreux choisi parmi le gel de silice et la silice précipitée ; et
(b) un agent tensio-actif contenant des esters choisi parmi les monoglycérides d'acides gras, les esters de sorbitan et d'acide gras, les esters de glycérine et d'acide gras et des mélanges de ceux-ci, en particulier le monostéarate de glycérine et le monostéarate de sorbitan ;
dans laquelle la taille moyenne des particules de la matière particulaire est dans la gamme de 1 à 20 micromètres et la matière particulaire a une teneur en carbone dans une gamme de 1% à 15% en poids de (a)+(b).

2. Matière particulaire selon la revendication 1, dans laquelle (a) a un revêtement comprenant (b).

3. Matière particulaire selon la revendication 1 ou 2, dans laquelle la matière particulaire est préparée en co-broyant (a) et (b) à une température dans la gamme de 55°C à 200°C.

4. Matière particulaire selon l'une quelconque des revendications 1 à 3, dans laquelle la matière particulaire a une taille moyenne de particules dans la gamme de 1 à 12 micromètres.

5. Matière particulaire selon l'une quelconque des revendications 1 à 4, dans laquelle la matière particulaire a une taille moyenne de particules de 1 à 7 micromètres.

6. Matière particulaire selon l'une quelconque des revendications 1 à 5, dans laquelle (b) est un élément du groupe constitué par les esters de sorbitan et d'acides gras et des mélanges de ceux-ci.

7. Matière particulaire selon l'une quelconque des revendications 1 à 6, dans laquelle la matière particulaire a une teneur en carbone de 1% à 10% en poids de (a) + (b).

8. Matière particulaire selon l'une quelconque des revendications 1 à 7, dans laquelle la matière particulaire a un volume de pores dans la gamme de 0,3 à 2,0 cm³/g.

9. Matière particulaire selon l'une quelconque des revendications 1 à 8, dans laquelle la matière particulaire a un volume de pores dans la gamme de 0,8 à 2,0 cm³/g.

10. Film de polymère comprenant 0,001% à 2,0% en poids de la matière particulaire selon l'une quelconque des revendications 1 à 9.

11. Film selon la revendication 10, dans laquelle le polymère comprend une polyoléfine.

12. Film selon l'une quelconque des revendications 10 à 11, dans laquelle le film a une épaisseur dans la gamme de 0,5 à 100 micromètres.

13. Procédé de préparation d'un agent particulaire anti-adhérence de contact comprenant les étapes consistant à :
(1) combiner la matière particulaire oxyde inorganique poreux choisie parmi le gel de silice et la silice précipitée, avec un agent tensio-actif contenant des esters choisis parmi des monoglycérides d'acide gras, des esters d'acide gras et de sorbitan, des esters d'acide gras et de glycérine et des mélanges de ceux-ci, en particulier monostéarate de glycérine et monostéarate de sorbitan, de sorte que la matière particulaire a une teneur en carbone dans une gamme de 1% à 15% en poids par rapport au poids de la matière particulaire et de l'agent ;
(2) mélanger la combinaison obtenue à l'étape (1) et récupérer une matière particulaire ayant une taille moyenne de particules de 1 à 20 micromètres.

14. Procédé selon la revendication 13, dans laquelle le mélange est réalisé à une température de 25°C ou plus.

15. Procédé pour conférer une anti-adhérence de contact à un film de polymère comprenant les étapes consistant à :
(1) combiner un polymère et une matière particulaire selon l'une quelconque des revendications 1 à 9 ; et
(2) former un film à partir du mélange obtenu à l'étape (1) de manière que le film comprenne 0,001% à 1% en poids de matière particulaire par rapport au poids total du film.

16. Utilisation d'une matière particulaire selon l'une quelconque des revendications 1 à 9 en tant qu'agent anti-adhérence de contact pour films de polymère.

17. Mélange maître de polymère comprenant un polymère et 5% à 20% en poids d'une matière particulaire selon l'une quelconque des revendications 1 à 9.
